Europäisches Patentamt

European Patent Office

Office européen des brevets

(19)

(11) Numéro de publication : **0 187 089**
**B1**

(12) **FASCICULE DE BREVET EUROPÉEN**

(45) Date de publication du fascicule du brevet :
**23.11.89**

(21) Numéro de dépôt : **85402464.3**

(22) Date de dépôt : **11.12.85**

(51) Int. Cl.⁴ : **G 01 N 15/08**

(54) **Appareil de mesure des caractéristiques débit-pression d'un gaz traversant un échantillon de produit à deux faces.**

(30) Priorité : **19.12.84 FR 8419434**

(43) Date de publication de la demande :
**09.07.86 Bulletin 86/28**

(45) Mention de la délivrance du brevet :
**23.11.89 Bulletin 89/47**

(84) Etats contractants désignés :
**DE FR GB**

(56) Documents cités :
**GB—A— 2 094 986**
**GB—A— 2 132 366**
**US—A— 4 198 853**
**US—A— 4 311 037**
**US—A— 4 480 463**

(73) Titulaire : **SOCIETE NATIONALE D'EXPLOITATION INDUSTRIELLE DES TABACS ET ALLUMETTES**
**53, quai d'Orsay**
**F-75340 Paris Cedex 07 (FR)**

(72) Inventeur : **Cholet, Georges**
**12, Venelle du Souhait**
**F-45000 Orleans (Loiret) (FR)**

(74) Mandataire : **Bloch, Robert et al**
**2, square de l'Avenue du Bois**
**F-75116 Paris (FR)**

## Description

La présente invention a pour objet un appareil de mesure des caractéristiques débit-pression d'un gaz traversant un échantillon de produit à deux faces, comprenant un porte-échantillon agencé pour qu'une des faces de l'échantillon soit soumise à la pression atmosphérique, une pompe pour appliquer une dépression sur l'autre face de l'échantillon, un capteur pour mesurer ladite dépression, un capteur pour mesurer le débit de gaz à travers l'échantillon qui résulte de ladite dépression, et une vanne à commande continue, intercalée entre l'échantillon et la pompe.

Un tel appareil est en particulier utilisé pour mesurer la perméabilité à l'air de matériaux utilisés comme papier à cigarette, ou gainage pour filtre, en conformité par exemple avec la norme internationale ISO 2965 ou avec la norme française NF V37-010. La perméabilité est le rapport du débit d'air (volume par unité de temps) par unité de surface de l'échantillon à la différence de pression à travers cet échantillon.

La demande de brevet britannique No. 2 094 986 A décrit un appareil du type ci-dessus, à ceci près qu'il ne comporte pas, pour faire varier le débit d'air à travers l'échantillon, une vanne à commande continue, mais une batterie de dispositifs à débit constant montés en parallèle, et reliant le porte-échantillon à la pompe. En série avec chaque dispositif est montée une valve et les valeurs nominales de débits susceptibles de parcourir chacune des branches sont en progression géométrique : le premier dispositif, lorsqu'il est en service, est nécessairement parcouru par un débit de 1 litre par minute, le second par un débit de 2 litres par minute, le troisième par un débit de 4 litres par minute et ainsi de suite.

Or, pour effectuer les mesures selon la norme ISO 2965, il est nécessaire que chaque mesure de perméabilité soit faite dans des conditions spécifiées de dépression, par exemple 0,25 et 1 kilopascal.

La quantification des débits réalisables avec l'appareil connu entraîne une quantification des dépressions qui ne permet pas, sauf par hasard, de réaliser matériellement les conditions de dépression précédentes. Il est donc nécessaire, avec ce système, de rechercher les combinaisons de dispositifs à débit constant telles que les dépressions mesurées correspondantes encadrent au plus près la valeur spécifiée. La perméabilité pour cette valeur spécifiée est ensuite obtenue par un calcul d'interpolation à partir des valeurs mesurées.

Il en résulte une mesure longue et fastidieuse et dont le résultat est entâché d'une erreur liée à l'interpolation.

Pour pallier ces inconvénients, le brevet US 4 311 037 prévoit un générateur de signal de consigne, des moyens de comparaison de la sortie de l'un des deux capteurs et de la sortie du générateur de signal de consigne, et une pompe à vitesse de rotation variable, dont la vitesse de rotation est commandée par la sortie des moyens de comparaison.

Ainsi, lorsqu'un tel appareil est agencé par exemple, pour que la sortie du capteur mesurant la dépression soit appliquée aux moyens de comparaison, il permet d'obtenir en permanence une dépression constante, dont la valeur est égale à la valeur spécifiée à l'aide du générateur de signal de consigne.

Toutefois, un tel appareil ne peut répondre que lentement à des variations relativement rapides en sortie du générateur de consigne, du fait que la régulation pour obtenir un débit donné, ou une dépression donnée, est obtenue en faisant varier la vitesse de rotation de la pompe. Il en résulte des imprécisions des mesures lorsque celles-ci doivent être faites assez rapidement, ou des risques de voir l'appareil entrer en auto-oscillations.

Par ailleurs, avec l'appareil décrit dans le brevet US 4 311 037, le contrôle d'un grand nombre d'échantillons distincts est long et fastidieux, car il est nécessaire d'arrêter la pompe à chaque changement d'échantillon et d'attendre ensuite assez longtemps le rétablissement de la dépression.

Enfin, dans cet appareil, la mesure du débit traversant l'échantillon fait intervenir un venturi, c'est-à-dire d'un étranglement dans une conduite. Or un tel dispositif présente une caractéristique débit-pression non linéaire, ce qui limite l'emploi de l'appareil à une gamme relativement étroite de débits si on veut éviter des corrections fastidieuses.

On connaît également, par le brevet US-A-4 480 463, un appareil du type défini ci-dessus, et qui comporte une vanne à commande continue, intercalée entre l'échantillon et la pompe. Dans cet appareil, la vanne est commandée pour que le débit augmente ou diminue linéairement avec le temps, c'est-à-dire selon une variation en dents de scie. Il est prévu des moyens de comparaison qui détectent l'égalité entre la sortie de l'un des deux capteurs et une ou plusieurs valeurs de référence, et commandent, à l'instant où l'égalité est détectée, la mémorisation de la sortie de l'autre capteur, afin de disposer ensuite d'un ou plusieurs couples de valeurs débit-pression caractérisant l'échantillon.

Dans cet appareil, la vanne est donc commandée, indépendamment des moyens de comparaison, pour que le débit varie linéairement, et les moyens de comparaison ne sont que de simples détecteurs d'égalité qui permettent la mémorisation, à la volée, d'un ou plusieurs couples particuliers de valeurs débit-pression. Avec un tel appareil, la durée de mesure d'un échantillon ne peut être inférieure à la durée d'une des dents de scie de la variation de débit, même si le couple débit pression auquel on s'intéresse a été mémorisé au début de la dent de scie. Un tel appareil est donc relativement lent.

La présente invention vise à pallier les inconvénients précédents en procurant un appareil permettant d'effectuer rapidement des mesures exactes et précises.

A cet effet, elle a pour objet un appareil du type ci-dessus, caractérisé par le fait qu'il comprend un générateur de signal de consigne et des moyens de comparaison de la sortie de l'un des deux capteurs et de la sortie du générateur de signal de consigne, agencés pour commander ladite vanne, de façon continue et en réponse à la différence entre ladite sortie de l'un des deux capteurs et ladite sortie du générateur de signal de consigne.

Dans l'appareil de l'invention, les variations de la dépression suivent de façon pratiquement instantanée celles du signal de sortie des moyens de comparaison. Le temps de réponse du système est donc très bref.

Le temps de mesure est réduit au minimum, car la dépression atteint la valeur spécifiée par l'opérateur à l'aide du générateur de signal de consigne en un temps très court.

Ce résultat est atteint notamment parce que, d'une part, la vanne est commandée par le signal de sortie des moyens de comparaison, et que, d'autre part, les moyens de comparaison ne sont pas de simples détecteurs d'égalité, comme ceux du brevet US-A-4 480 463, mais des moyens pour commander, de façon continue, la vanne en réponse à la différence entre la sortie de l'un des deux capteurs, et la sortie du générateur de signal de consigne.

Selon une caractéristique supplémentaire de l'invention, lesdits moyens de comparaison comportent un circuit électronique, comprenant un ensemble soustracteur, suivi d'une chaîne d'amplification comportant un amplificateur à réponse proportionnelle, un amplificateur à réponse intégrale et un amplificateur à réponse dérivée, ces trois amplificateurs étant montés en parallèle, ladite chaîne étant suivie d'un amplificateur de puissance pour commander ladite vanne.

La précision du système est grande, sans risque d'auto-oscillations.

Selon une autre caractéristique de l'invention, l'appareil comprend, intercalé entre ladite vanne et ladite pompe une dérivation reliée à l'atmosphère par l'intermédiaire d'une vanne auxiliaire pour annuler ladite dépression alors que la pompe reste en fonctionnement.

Le changement d'échantillon peut alors être très rapide.

Selon une autre caractéristique de l'appareil de l'invention, ledit capteur de débit comprend un élément à perte de charge multicapillaire et un capteur de pression différentiel.

La mesure de débit est alors linéaire sur une très large gamme de débits.

L'appareil selon l'invention peut également être agencé pour que la sortie du capteur mesurant le débit d'air soit appliquée aux moyens de comparaison, afin qu'une valeur particulière de débit, spécifiée à l'aide du générateur de signal de consigne, soit réalisée, par exemple pour le respect d'une recommandation d'essai différente des normes citées.

L'invention sera mieux comprise à l'aide de la description suivante d'une forme de réalisation préférée du système selon l'invention, faite en se référant aux dessins annexés, sur lesquels :

— la figure 1 représente un schéma de principe de l'appareil selon l'invention ;

— la figure 2 représente un schéma du circuit électronique de commande de vanne et du générateur de signal de consigne de la figure 1 ;

— la figure 3 représente un schéma de principe d'une variante de l'appareil selon l'invention ; et,

— la figure 4 représente un schéma de principe du dispositif de mise à zéro automatique de la mesure de débit de l'appareil de la figure 1.

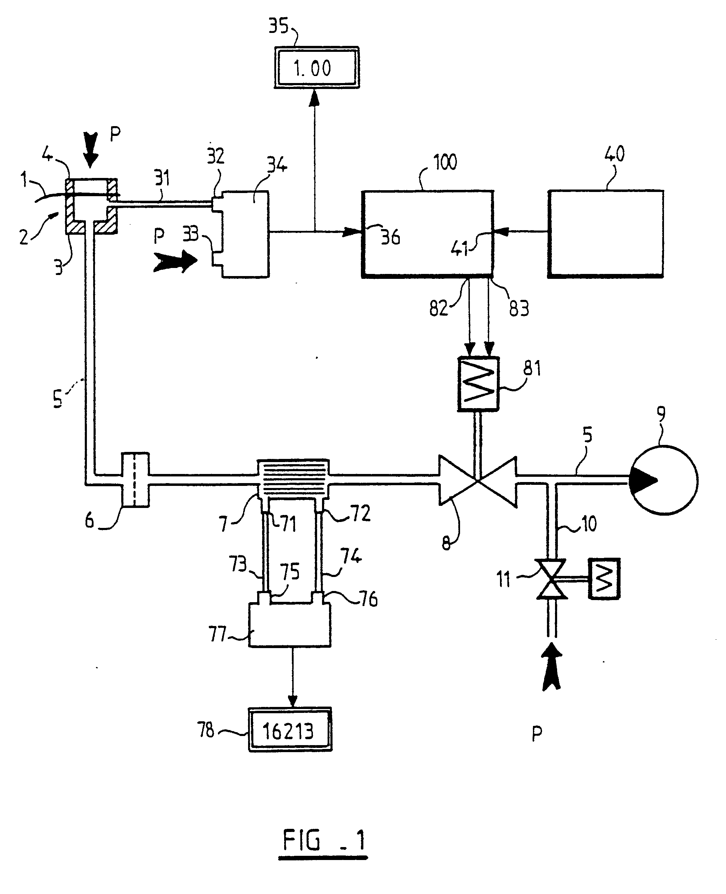

En se référant à la figure 1, un échantillon de papier à cigarette, comportant une face interne et une face externe, et dont on veut mesurer la perméabilité est placé dans un porte-échantillon 2. Le porte-échantillon 2 est constitué d'une pièce métallique fixe 3 ouverte d'un côté, et d'une pièce métallique mobile 4 ouverte des deux côtés reposant sur la pièce fixe 3 par interposition d'un joint en élastomère silicone, de façon à ne pas déformer ni marquer l'échantillon qui doit être placé entre les pièces métalliques 3 et 4. Les pièces métalliques 3 et 4 délimitent une surface de mesure de forme et de dimensions déterminées. La face externe de l'échantillon 1 est placée du côté de la pièce mobile 4, qui la laisse soumise à la pression atmosphérique P. La pièce fixe 3 est en communication avec un conduit 5.

Le conduit 5 est relié à une pompe 9 par l'intermédiaire d'un filtre 6, d'un élément à perte de charge multicapillaire 7, et d'une vanne de contrôle à commande continue 8.

L'élément à perte de charge multicapillaire 7 est muni de deux sorties 71 et 72 reliées par deux conduits 73 et 74 aux deux entrées 75 et 76 d'un capteur différentiel de pression 77 à sortie électrique. Cette sortie est reliée à un circuit d'affichage électronique 78.

Une dérivation 10 est raccordée au conduit 5 entre la vanne 8 et la pompe 9. La dérivation 10 est reliée à l'atmosphère par l'intermédiaire d'une vanne auxiliaire 11.

La pièce fixe 3 est également en communication avec un conduit 31, relié à une entrée 32 d'un capteur différentiel de pression 34 à sortie électrique. L'autre entrée 33 du capteur 34 est soumise à la pression atmosphérique P. La sortie électrique du capteur 34 est reliée d'une part à un circuit d'affichage électronique 35 et d'autre part à une borne d'entrée 36 d'un circuit électronique de commande de vanne 100.

La sortie électrique d'un générateur de signal de consigne 40 commandable par un opérateur, est reliée à une borne d'entrée 41 du circuit électronique de commande de vanne 100. L'enroulement 81 de la vanne de contrôle à commande continue 8 est reliée à deux sorties 82 et 83 du circuit électronique de commande de vanne 100.

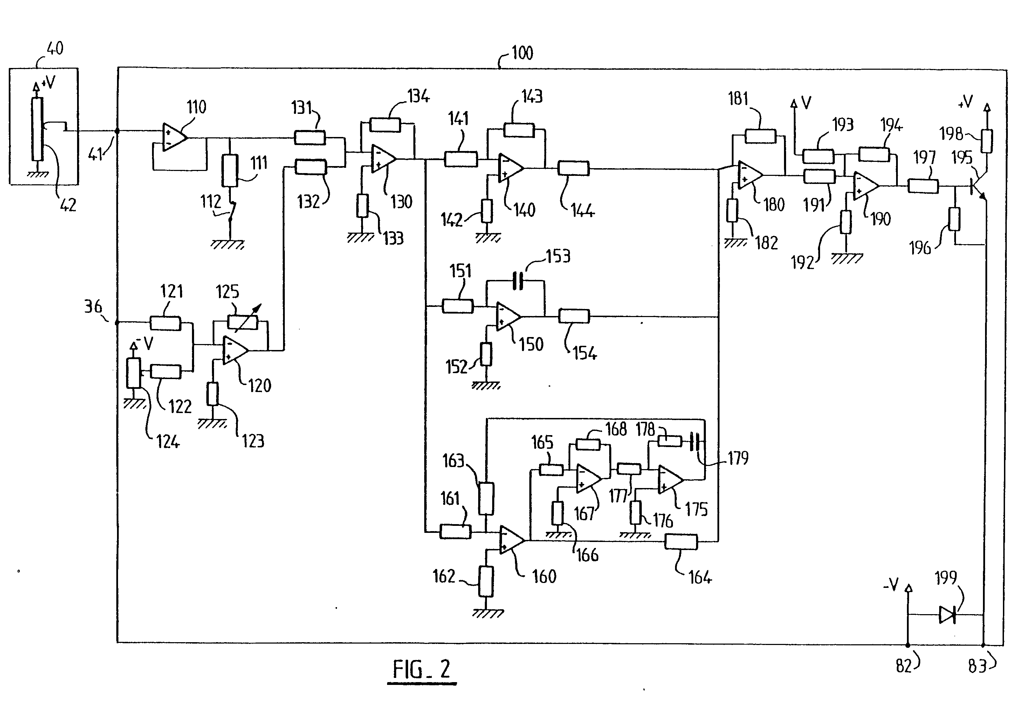

En se référant maintenant à la figure 2, la borne d'entrée 41 est reliée à l'entrée plus d'un amplificateur opérationnel, désigné dans la suite par A.O., 110 monté en suiveur, dont la sortie est reliée à la masse par l'intermédiaire d'un contact de relais 112 et d'une résistance 111 et à l'entrée moins d'un A.O. 130 par l'intermédiaire d'une résistance 131.

La borne d'entrée 36 est reliée par l'intermédiaire d'une résistance 121 à l'entrée moins d'un A.O. 120 dont l'entrée plus est mise à la masse par une résistance 123. Le curseur d'un potentiomètre 124 dont les extrémités sont reliées à la masse et à une tension d'alimentation négative — V est relié à l'entrée moins de l'A.O. 120 par une résistance 122. Un potentiomètre 125 est placé entre la sortie et l'entrée moins de l'A.O 120. Le signal de sortie de l'A.O. 120 est relié à l'entrée moins de l'A.O. 130 par une résistance 132.

L'entrée plus de l'A.O. 130 est mise à la masse par une résistance 133. Une résistance 134 est placée entre l'entrée moins et la sortie de l'A.O. 130.

La sortie de l'A.O. 130 est reliée aux entrées moins de trois AO 140, 150 et 160, par l'intermédiaire de trois résistances 141, 151 et 161 respectivement. Les entrées plus des trois A.O. 140, 150 et 160 sont mises à la masse par trois résistances 142, 152 et 162 respectivement. Les sorties des trois A.O. 140, 150 et 160 sont reliées à l'entrée moins d'un A.O. 180 par trois résistances 144, 154 et 164 respectivement.

Une résistance 143 est placée entre l'entrée moins et la sortie de l'A.O. 140.

Un condensateur 153 est placé entre l'entrée moins et la sortie de l'A.O. 150.

L'entrée moins de l'A.O. 160 est reliée à la sortie d'un A.O. 175 par l'intermédiaire d'une résistance 163. Un condensateur 179 en série avec une résistance 178 est placé entre l'entrée moins et la sortie de l'A.O. 175. L'entrée plus de l'A.O. 175 est mise à la masse par une résistance 176.

Une résistance 177 relie la sortie d'un A.O. 167 à l'entrée moins de l'A.O. 175.

Une résistance 168 est placée entre l'entrée moins et la sortie de l'A.O. 167. Une résistance 165 relie la sortie de l'A.O. 160 et l'entrée moins de l'A.O. 167. L'entrée plus de l'A.O. 167 est mise à la masse par une résistance 166.

L'entrée plus de l'A.O. 180 est mise à la masse par une résistance 182. Une résistance 181 relie l'entrée moins et la sortie de l'A.O. 180. La sortie de l'A.O. 180 est reliée à l'entrée moins d'un A.O. 190 par une résistance 191. Une tension d'alimentation positive V est reliée à l'entrée moins de l'A.O. 190 par une résistance 193. Une résistance 194 relie l'entrée moins et la sortie de l'A.O. 190.

La sortie de l'A.O. 190 est reliée à la base d'un transistor de puissance 195 par une résistance 197. Le collecteur du transistor 195 est relié à la tension d'alimentation positive V par une résistance 198. Une résistance 196 est montée en parallèle sur la jonction émetteur base du transistor 195. L'émetteur du transistor 195 est relié à la borne de sortie 83. La borne de sortie 82 est reliée à la tension d'alimentation négative — V. Une diode 199 relie les bornes 82 et 83.

Pour simplifier la figure, les alimentations délivrant les tensions d'alimentation + V et — V n'ont pas été représentées. Elles sont de conception classique.

Le générateur de signal de consigne 40 est constitué par un potentiomètre 42 dont les extrémités sont reliées à la masse et à la tension d'alimentation positive V. La tension sur le curseur mobile constitue le signal de consigne appliqué à la borne 41.

L'appareil selon l'invention, qui vient d'être décrit, fonctionne comme suit.

Pendant la phase de mise en place de l'échantillon 1 sur le porte-échantillon 2, la vanne 8 est fermée car le contact 112 est ouvert, ce qui provoque une valeur de consigne nulle, et la vanne 11 est ouverte (par une électronique de commande non représentée) afin d'assurer une dépression nulle sur l'échantillon tout en permettant à la pompe 9 de rester en fonctionnement.

Lorsque l'échantillon est en place, l'opérateur règle le générateur de signal de consigne 40 à une certaine valeur appliquée sur la borne 41 du circuit 100. Au début de la mesure, la dépression à laquelle est soumis l'échantillon 1 est nulle, et le signal appliqué sur la borne 36 du circuit 100 est nulle.

Le circuit 100 fonctionne de la manière suivante. L'A.O. 110 est monté en suiveur et l'A.O. 120 en inverseur, décaleur et adaptateur de niveau. Il en résulte que la sortie de l'amplificateur inverseur sommateur 130-134 varie comme la différence entre le signal représentatif de la dépression mesurée appliqué sur la borne 36 et le signal de consigne appliqué sur la borne 41. La sortie de l'amplificateur 130-134 est appliquée à l'entrée de la chaîne constituée par la mise en parallèle d'un amplificateur inverseur 140-144 à réponse proportionnelle, d'un amplificateur inverseur 150-154 à réponse intégrale et d'un amplificateur inverseur 160-179 à réponse dérivée. La sortie de cette chaîne est constituée par la sortie du sommateur inverseur 180-182, et elle commande, par l'intermédiaire de l'amplificateur inverseur, décaleur et adaptateur de niveau 190-194 un étage de puissance 195-198 pour piloter l'enroulement 81, de la vanne de contrôle à commande continue 8, enroulement protégé par la diode 199, dans un sens tel que la vanne s'ouvre lorsque la différence entre le signal représentatif de la dépression mesurée et le signal de consigne est négative.

C'est ce qui se passe en début de mesure, et la dépression augmente alors, la vanne 8 étant ouverte. Elle se ferme lorsque la dépression atteint la valeur spécifiée par le générateur de signal de consigne 40. Les amplificateurs à réponse proportionnelle, intégrale et dérivée 140-144, 150-154, 160-179 permettent d'arriver rapidement à cet état avec le meilleur compromis vitesse-précision-stabilité.

L'échantillon étant soumis à la dépression spécifiée, on peut mesurer le débit grâce à l'élément à perte de charge multicapillaire 7 dont la caractéristique pression-débit est rigoureusement linéaire, et calculer la perméabilité de l'échantillon.

Le filtre 6 protège l'élément à perte de charge multicapillaire 7.

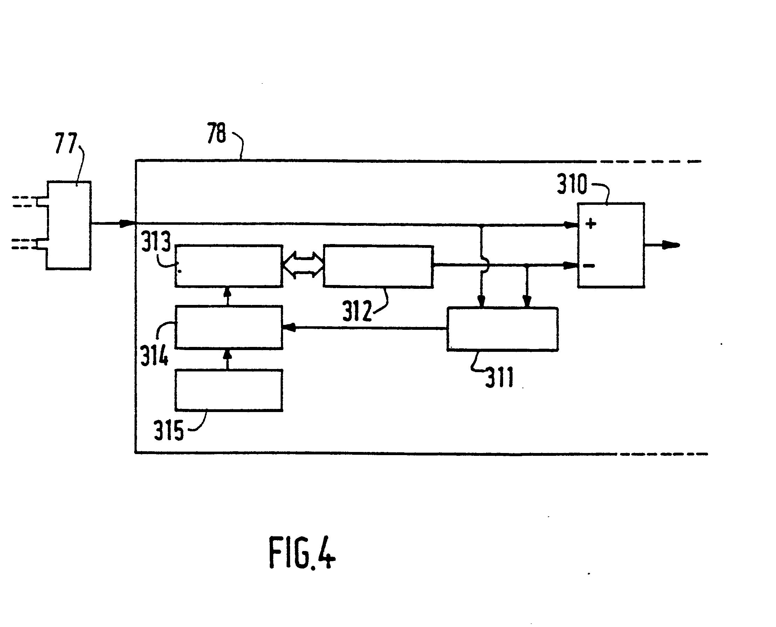

Afin d'obtenir une bonne précision même dans les faibles débits, une mise à zéro automatique est prévue avant chaque mesure dans le système d'affichage 78. Dans les instants qui précèdent la mesure, on effectue une mise en mémoire de la tension résiduelle présente en sortie du capteur 77, pour la soustraire en permanence, par la suite, du résultat brut de la mesure. La mise en mémoire est effectuée, comme cela est représenté sur la figure 4, grâce à un générateur d'impulsions d'horloge 315, qui fait avancer un compteur 313, suivi d'un convertisseur numérique-analogique 312 dont la tension de sortie est comparée à la tension résiduelle par un comparateur 311, les impulsions d'horloge étant bloquées par une porte 314 lorsque ces deux tensions sont égales. On dispose alors, en sortie du convertisseur numérique-analogique 312, d'une tension analogique égale à la tension résiduelle juste avant la mesure, et qui peut être retranchée par un soustracteur analogique 310 au résultat brut.

A titre d'exemple, le temps de mesure d'un appareil conforme à la description est de l'ordre de la seconde.

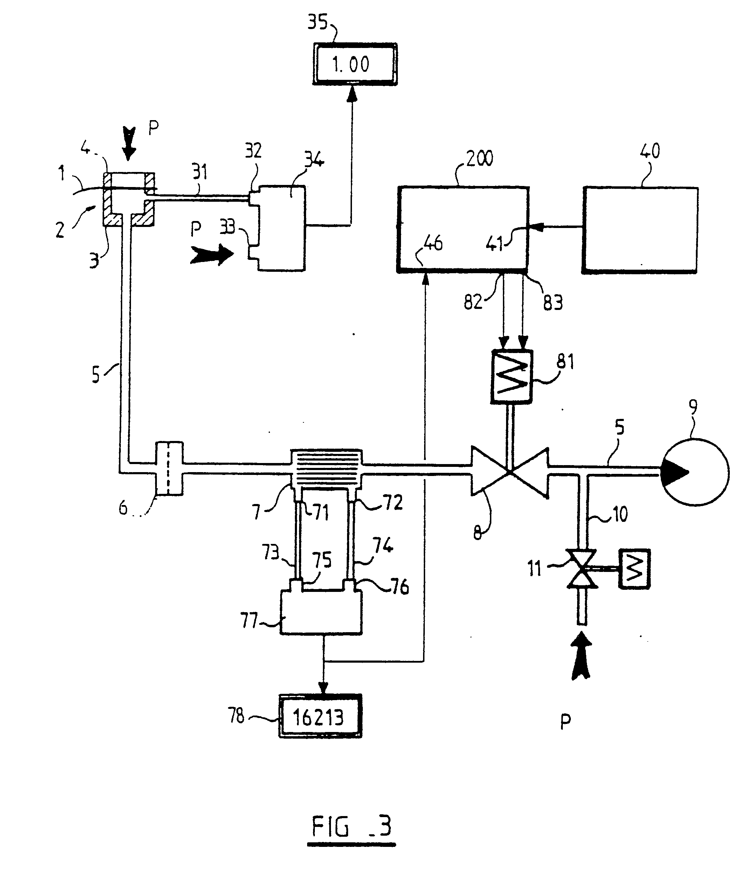

Enfin, la forme de réalisation préférée décrite ci-dessus n'est pas la seule possible, et la figure 3 montre une variante où le signal de sortie du capteur 77, représentatif du débit mesuré est appliqué à une entrée 46 d'un circuit électronique 200 analogue dans son principe au circuit 100, le reste du système étant inchangé. Il devient alors possible de faire les mesures dans les conditions de débit fixées par le générateur de signal de consigne 40.

La description précédente d'un appareil de mesure de perméabilité à l'air d'un échantillon de papier à cigarette n'est naturellement pas limitative. C'est ainsi que l'appareil de l'invention peut s'appliquer à la mesure des caractéristiques débit-pression d'un gaz autre que l'air, et en particulier d'un gaz chargé de particules comme la fumée. De même, l'échantillon considéré peut être, par exemple, le filtre d'une cigarette, ou une cigarette. Les mesures peuvent également être effectuées dans des conditions variées de dépression (constante, ou suivant une loi de variation temporelle déterminée) ou de débit, ou encore concerner la vitesse de combustion d'une cigarette dans des conditions particulières. Enfin, l'appareil de l'invention est très bien adapté aux mesures du type continu où l'échantillon est une bande de grande longueur qui défile à une certaine vitesse devant le porte-échantillon, transformé de façon adéquate. La réponse rapide de l'appareil de l'invention permet de suivre avec précision les variations des caractéristiques de l'échantillon, même lorsque celui-ci défile relativement rapidement.

## Revendications

1. Appareil de mesure des caractéristiques débit-pression d'un gaz traversant un échantillon de produit à deux faces (1), comprenant un porte-échantillon (2) agencé pour qu'une des faces de l'échantillon soit soumise à la pression atmosphérique (P), une pompe (9) pour appliquer une dépression sur l'autre face de l'échantillon, un capteur (34) pour mesurer ladite dépression, un capteur (7, 71-77) pour mesurer le débit de gaz à travers l'échantillon (1) qui résulte de ladite dépression, et une vanne (8, 81) à commande continue, intercalée entre l'échantillon (1) et la pompe (9), caractérisé par le fait qu'il comprend un générateur de signal de consigne (40) et des moyens de comparaison (100 ; 200) de la sortie de l'un des deux capteurs (34 ; 7, 71-77) et de la sortie du générateur de signal de consigne (40), agencés pour commander ladite vanne (8, 81), de façon continue et en réponse à la différence entre ladite sortie de l'un des deux capteurs (34 ; 7, 71-77) et ladite sortie du générateur de signal de consigne (40).

2. Appareil selon la revendication 1, caractérisé par le fait que lesdits moyens de comparaison (100 ; 200) comportent un circuit électronique, comprenant un ensemble soustracteur (110-134), suivi d'une chaîne d'amplification comportant un amplificateur à réponse proportionnelle (140-144), un amplificateur à réponse intégrale (150-154), et un amplificateur à réponse dérivée (160-179), ces trois amplificateurs étant montés en parallèle, ladite chaîne étant suivie d'un amplificateur de puissance (180-198) pour commander ladite vanne (8, 81).

3. Appareil selon l'une des revendications 1 et 2, caractérisé par le fait qu'il comprend, intercalé entre ladite vanne (8, 81) et ladite pompe (9) une dérivation (10) reliée à l'atmosphère par l'intermédiaire d'une vanne auxiliaire (11) pour annuler ladite dépression alors que la pompe (9) reste en fonctionnement.

4. Appareil selon l'une des revendications 1 à 3, caractérisé par le fait que ledit capteur de débit (7, 71-77) comprend un élément à perte de charge multi-capillaire (7) et un capteur de pression différentiel (77).

5. Appareil selon l'une des revendications 1 à 4, caractérisé par le fait qu'il comprend des moyens de mémorisation (311-315) de la valeur de la tension résiduelle en sortie du capteur de débit (7, 71-77) et des moyens (310) pour retrancher cette valeur à la valeur mesurée.

6. Appareil selon l'une des revendications 1 à 5, caractérisé par le fait que la sortie du générateur de signal de consigne (40) est variable au cours du temps.

## Claims

1. Apparatus for measuring flow-pressure characteristics of a gas passing through a product sample with two faces (1), comprising a sample

holder (2) adapted so that one of the faces of the sample is subjected to the atmospheric pressure (P), a pump (9) for applying a depression on the other face of the sample, a sensor (34) for measuring said depression, a sensor (7, 71-77) for measuring the gas flow rate through the sample (1) which results from said depression, and a continuously controlled valve (8, 81) inserted between the sample (1) and the pump (9), characterized in that it comprises a reference signal generator (40) and means (100 ; 200) for comparing the output of one of the two sensors (34, 7, 71-77) with the output of the reference signal generator (40), adapted for controlling said valve (8, 81) continuously and in response to the difference between said output of one of the two sensors (34 ; 7, 71-77) and said output of the reference signal generator (40).

2. Apparatus as claimed in claim 1, characterized in that said comparison means (100 ; 200) comprise an electronic circuit, including a subtractor assembly (110-134), followed by an amplification chain comprising a proportional response amplifier (140-144), an integral response amplifier (150-154) and a differential response amplifier (160-179), these three amplifiers being connected in parallel, said chain being followed by a power amplified (180-198) for controlling said valve (8, 81).

3. Apparatus as claimed in one of claims 1 and 2, characterized in that it comprises, inserted between said valve (8, 81) and said pump (9), a branch duct (10) connected to the atmosphere through an auxiliary valve (11) for nulling said depression when the pump (9) remains in operation.

4. Apparatus as claimed in one of claims 1 to 3, characterized in that said flow rate sensor (7 ; 71-77) comprises a multicapillary pressure loss element (7) and a differential pressure sensor (77).

5. Apparatus as claimed in one of claims 1 to 4, characterized in that it comprises means (311-315) for storing the value of the residual voltage at the output of the flow rate sensor (7, 71-77) and means (310) for subtracting this value from the measured value.

6. Apparatus as claimed in one of claims 1 to 5, characterized in that the output of said reference signal generator (40) is variable in time.

**Patentansprüche**

1. Vorrichtung zum Messen des Durchfluß-Druckverhaltens eines Gases, das eine Probe eines Produktes mit zwei Seiten (1) durchströmt, welche einen Probenträger (2) aufweist, der so betreibbar ist, daß eine der Seiten der Probe mit atmosphärischem druck (P) beaufschlagt ist, sowie eine Pumpe (9) zum Anlegen eines Unterdrucks auf der anderen Seite der Probe, eine Meßzelle (34) zum Erfassen des Unterdrucks, eine Meßzelle (7, 71-77) zum Erfassen des Gasdurchflusses durch die Probe (1) infolge des Unterdrucks, und einen stetig regelbaren Ventilschieber (8, 81), der zwischen die Probe (1) und die Pumpe (9) geschaltet ist, dadurch gekennzeichnet, daß ein Anweisungssignalerzeuger (40), und eine Vergleichseinrichtung (100 ; 200) zum Vergleichen des Ausgangssignals aus einem der beiden Meßzellen (34 ; 7, 71-77) und des Ausgangssignals aus dem Anweisungssignalerzeuger (40) vorgesehen ist, die so arbeitet, daß der Ventilschieber (8, 81) kontinuierlich im Ansprechen auf die Differenz zwischen dem Ausgangssignal aus einem der beiden Meßzellen (34 ; 7, 71-77) und dem Ausgangssignal aus den Anweisungssignalerzeugers (40) austeuerbar ist.

2. Vorrichtung nach Anspruch 1, dadurch gekennzeichnet, daß die Vergleichseinrichtung (100 ; 200) eine elektronische Schaltung aufweist, in welcher eine Subtrahiereinrichtung (110-134) mit nachfolgender Verstärkerkette vorgesehen ist, welche einen proportional ansprechenden Verstärker (140-144), einen integral ansprechenden Verstärker (150-154) und einen differential ausprechenden Verstärker (160-179) aufweist, wobei diese drei Verstärker parallel geschaltet sind und sich an diese Verstärkerkette ein Leistungsverstärker (180-198) zur Ansteuerung des Ventilschiebers (8, 81) anschießt.

3. Vorrichtung nach Anspruch 1 oder 2, dadurch gekennzeichnet, daß zwischen den Ventilschieber (8, 81) und die Pumpe (9) eine Zweigleitung (10) geschaltet ist, die über ein Nebenventil (11) mit der Atmosphäre so verbunden ist, daß der Unterdruck zum Abklingen bringbar ist, während die Pumpe (9) in Betrieb bleibt.

4. Vorrichtung nach einem der Ansprüche 1 bis 3, dadurch gekennzeichnet, daß die Meßzelle (7, 71-77) zum Erfassen des Durchflusses ein Druckverlustelement (7) mit mehreren Kapillaren sowie eine differentiale Druckmeßzelle (77) aufweist.

5. Vorrichtung nach einem der Ansprüche 1 bis 4, dadurch gekennzeichnet, daß eine Speichereinrichtung (311-315) zum Speichern des Restspannungswerts am Ausgang der Meßzelle (7, 71-77) für den Durchfluß, sowie eine Einrichtung (310) zum Umformen dieses Wertes auf den Meßwert vorgesehen sind.

6. Vorrichtung nach einem der Ansprüche 1 bis 5, dadurch gekennzeichnet, daß das Ausgangssignal des Anweisungssignalerzeugers (40) über die Zeit veränderlich ist.

FIG _ 1

FIG. 2

FIG _3

FIG.4